# FASCICULE DE BREVET EUROPEEN

(11) **EP 2 588 334 B1**
(45) Date de publication et mention de la délivrance du brevet: **30.04.2014**
(21) Numéro de dépôt: 11736432.3
(22) Date de dépôt: 24.06.2011
(51) Int. Cl.: B60H 1/00

(54) **DISPOSITIF ET PROCEDE D'ETANCHEITE D'UNE OUVERTURE A CHEVAL SUR DEUX SURFACES DE CARROSSERIE AUTOMOBILE FORMANT UN ANGLE**
VORRICHTUNG UND DICHTUNGSVERFAHREN EINER ÖFFNUNG IN ZWEI ANGEWINKELTEN OBERFLÄCHEN EINER AUTOMOBILEN KARROSSERIE
ARRANGEMENT AND SEALING METHOD OF AN OPENING FORMED BY TWO ANGLED SURFACES OF AN AUTOMOTIVE BODY STRUCTURE

(30) Priorité: 29.06.2010 FR 1055270
(43) Date de publication de la demande: 08.05.2013
(73) Titulaire: Renault S.A.S., 92100 Boulogne-Billancourt (FR)
(72) Inventeur: CAMUS, Guillaume, F-78280 Guyancourt (FR); BISROR, Olivier, F-92350 Le Plessis Robinson (FR); TABUTEAU, Pascal, F-78180 Montigny le Bretonneux (FR)
(86) Numéro de dépôt international: PCT/FR2011/051464
(87) Numéro de publication internationale: WO 2012/001277

(56) Documents cités:
- DE-A1- 4 306 395
- FR-A1- 2 768 369
- FR-A1- 2 863 549

## Description

La présente invention concerne un dispositif d'étanchéité d'une ouverture à cheval sur deux surfaces de carrosserie automobile formant un angle, notamment pour le passage d'un conduit de chauffage ou de ventilation automobile.

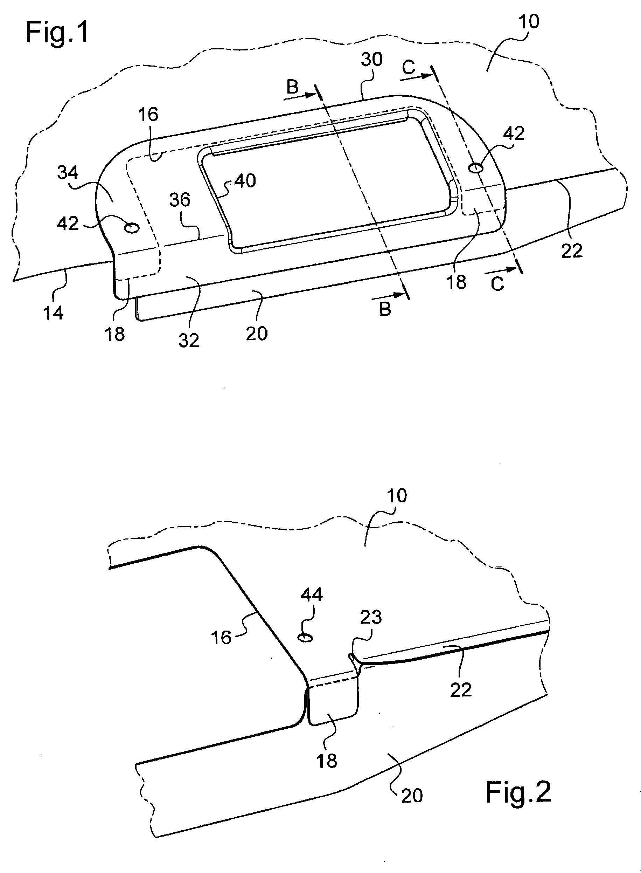

DE 43 06 395 A1 divulgue un dispositif d'étanchéité à cheval sur deux surfaces voir Fig. 2 de carrosserie automobile, les deux surfaces formant deux échancrures définissant une ouverture à cheval sur les deux surfaces, où il est constitué d'un cadre métallique rigide 1 2 à fenêtre, de manière à s'appliquer aux deux surfaces voir Fig. 2 autour de l'ouverture, et d'un joint 20 d'étanchéité voir col. 1, ligne 40 entourant ladite fenêtre et l'ouverture et disposé sur la surface interne du cadre rigide 1 2 voir Fig. 2 tournée vers les surfaces de carrosserie, ce cadre 12 étant adapté pour être rendu solidaire des deux surfaces par des moyens de solidarisation.

Il est connu de réaliser une entrée d'air de ventilation dans une ouverture située entièrement dans la traverse de baie ou entièrement dans la cloison de chauffage, disposées à l'avant de l'habitacle d'une automobile. Cette ouverture est réalisée dans une seule tôle d'une seule et même pièce. Pour des raisons évidentes de simplicité, elle est réalisée dans une zone plane de la tôle, de sorte qu'il est assez aisé d'en concevoir l'étanchéité. On voit un exemple d'une telle réalisation dans la figure 1 du document FR 2 626 821 où l'ensemble de climatisation présente un conduit d'amenée d'air qui passe dans une ouverture étanche formée dans la traverse de baie.

Pour des raisons de standardisation et de mise en place de certains équipements volumineux, une ouverture réalisée dans la seule traverse de baie ou dans la seule cloison de chauffage peut s'avérer insuffisante et il est apparu qu'il serait opportun de pouvoir réaliser une ouverture qui soit à cheval sur ces deux tôles distinctes et formant un angle entre elles, que sont la traverse de baie et la cloison de chauffage, et de réaliser cette ouverture d'une manière qui permette également une bonne étanchéité. Tel est le but de l'invention.

Selon l'invention, on prévoit un dispositif d'étanchéité à cheval sur deux surfaces de carrosserie automobile formant un angle, les deux surfaces formant deux échancrures définissant une ouverture à cheval sur les deux surfaces, caractérisé en ce qu'il est constitué d'un cadre métallique rigide à fenêtre, anglé de manière à s'appliquer aux deux surfaces autour de l'ouverture, et d'un joint d'étanchéité thermoexpansible entourant ladite fenêtre et l'ouverture et disposé sur la surface interne du cadre rigide tournée vers les surfaces de carrosserie, ce cadre étant adapté pour être rendu solidaire des deux surfaces par des moyens de solidarisation.

Avantageusement, les moyens de solidarisation comportent des points de soudure répartis autour de l'ouverture.

Il est avantageusement prévu des moyens de prépositionnement ou de présolidarisation partielle du cadre à l'une au moins des surfaces, par exemple grâce à des rivets coopérants avec des trous, notamment des trous oblongs, prévus dans le cadre et la surface concernée.

De préférence, la fenêtre du cadre est plus petite que l'ouverture des surfaces et est latéralisée par rapport à celle-ci, c'est-à-dire qu'on peut prévoir un cadre avec fenêtre à gauche ou à droite, selon les besoins de la conduite intérieure.

Le cadre est adapté à recevoir, de préférence avec un joint d'étanchéité, un conduit d'air entourant la fenêtre et destiné par exemple à la ventilation ou à la climatisation.

Dans un véhicule dans lequel une surface de traverse de baie et une surface de cloison de chauffage sont réunies horizontalement par une feuillure et où l'ouverture à cheval est entourée de part et d'autre par une patte coudée tombant de la surface de traverse de baie et disposé à l'extrémité de la feuillure en laissant un trou de fin de feuillure, le cadre est fixé sur ses côtés sur les deux pattes. De manière particulièrement avantageuse, il est prévu entre le coude des pattes et le coude du cadre qui les surmonte un passage horizontal destiné à faciliter le fluage du joint d'étanchéité en direction du trou de fin de feuillure.

L'invention concerne aussi un procédé de réalisation d'un dispositif d'étanchéité à cheval sur deux surfaces de carrosserie automobile formant un angle, les deux surfaces formant deux échancrures définissant une ouverture à cheval sur les deux surfaces, caractérisé en ce qu'on vient appliquer un cadre métallique rigide à fenêtre, anglé, sur les deux surfaces autour de l'ouverture, en ayant prévu un joint d'étanchéité thermoexpansible entourant ladite fenêtre et l'ouverture et disposé sur la surface interne du cadre rigide tournée vers les surfaces de carrosserie, en ce qu'on solidarise ce cadre avec les deux surfaces par des moyens de solidarisation et en ce qu'on chauffe l'ensemble de manière que le joint d'étanchéité gonfle, ce qui permet de réaliser une étanchéité efficace.

De manière avantageuse, on chauffe l'ensemble par le passage en bain chaud de cataphorèse de la carrosserie, ce qui évite une étape supplémentaire.

D'autres caractéristiques et avantages de l'invention ressortiront de la description suivante d'un exemple de réalisation. Il sera fait référence aux figures annexées représentant un dispositif d'étanchéité d'une ouverture de carrosserie automobile conforme à l'invention.
- La figure 1 représente en vue perspective de l'avant, la traverse de baie, la cloison de chauffage, et au-dessus d'elles, le cadre du dispositif d'étanchéité.
- La figure 2 représente un détail de réalisation d'une patte de recouvrement de la traverse de baie sur la cloison de chauffage.
- La figure 3 représente une coupe transversale schématique de la traverse de baie et de la cloison de chauffage, dans le sens longitudinal du véhicule, prise au niveau du milieu du cadre du dispositif d'étanchéité, selon la ligne B-B de la figure 1.
- La figure 4 représente une coupe transversale schématique de la traverse de baie et de la cloison de chauffage, dans le sens longitudinal du véhicule, prise au niveau de la patte de recouvrement sous le cadre du dispositif d'étanchéité, selon la ligne C-C de la figure 1.
- La figure 5 est un agrandissement du détail A de la figure 4, montrant les différentes couches au niveau du coude formé dans le cadre d'étanchéité.
- La figure 6 est une vue de face du cadre rigide du dispositif d'étanchéité conforme à l'invention.
- La figure 7 est une vue arrière de l'intérieur du cadre rigide du dispositif d'étanchéité conforme à l'invention.

La carrosserie automobile comporte, au devant de l'habitacle, une traverse inférieure de baie (TIB) destinée à supporter le bas du pare-brise avant, et formée généralement d'un caisson de deux tôles respectivement supérieure 10 et inférieure 12, la tôle 10 étant inclinée vers l'habitacle selon un certain angle, par exemple de 45°. La tôle 10 de TIB comprend, du côté de l'habitacle, un bord horizontal 14, dans lequel est formée une large échancrure 16 destinée à accueillir en partie l'ouverture de ventilation primaire, encadrée de deux pattes 18 tombant à la verticale.

Sous la TIB se trouve la cloison de chauffage comprenant du côté de l'habitacle une tôle 20 formant une surface verticale dans laquelle est partiellement prise l'ouverture de ventilation primaire grâce à une échancrure non visible sur la figure formée dans le bord de la tôle 20 : cette échancrure forme conjointement avec l'échancrure 16 l'ouverture de ventilation à cheval sur les deux tôles et qu'il convient d'étanchéifier par le dispositif de l'invention.

La surface de la tôle 20 de la cloison de chauffage et celle de la tôle 10 de la TIB forment un angle obtus de 135° et se raccordent au niveau d'une feuillure horizontale 22, de part et d'autre de l'ouverture de ventilation primaire. Cette ouverture de ventilation primaire, à cheval sur ces deux surfaces, est munie d'un dispositif secondaire de calibration et d'étanchéité qu'on va maintenant décrire.

L'ouverture primaire de tôle, c'est-à-dire la zone de l'échancrure 16 et l'autre échancrure coopérante, est surmontée par un cadre métallique rigide 30 approximativement rectangulaire mais anglé, c'est-à-dire formé de deux parties respectivement 32 et 34 disposées à 135° le long d'un coude horizontal 36. La partie supérieure 34, éventuellement arrondie aux angles, est destinée à s'appliquer sur la surface de la tôle 10 et la partie inférieure 32 est destinée à s'appliquer sur la surface de la tôle 20. Dans le cadre 30 on a formé une fenêtre sensiblement rectangulaire 40, à cheval sur les deux parties 32 et 34, et dont les bords sont avantageusement repliés ou ourlés pour rigidifier le cadre. La largeur de la fenêtre 40 est moindre que celle de l'échancrure 16 et la position de la fenêtre 40 par rapport aux échancrures 16 de l'ouverture peut être choisie à l'avance en fonction des besoins et de la latéralisation de l'équipement du véhicule (plus à gauche ou plus à droite, selon que la direction est à droite ou à gauche).

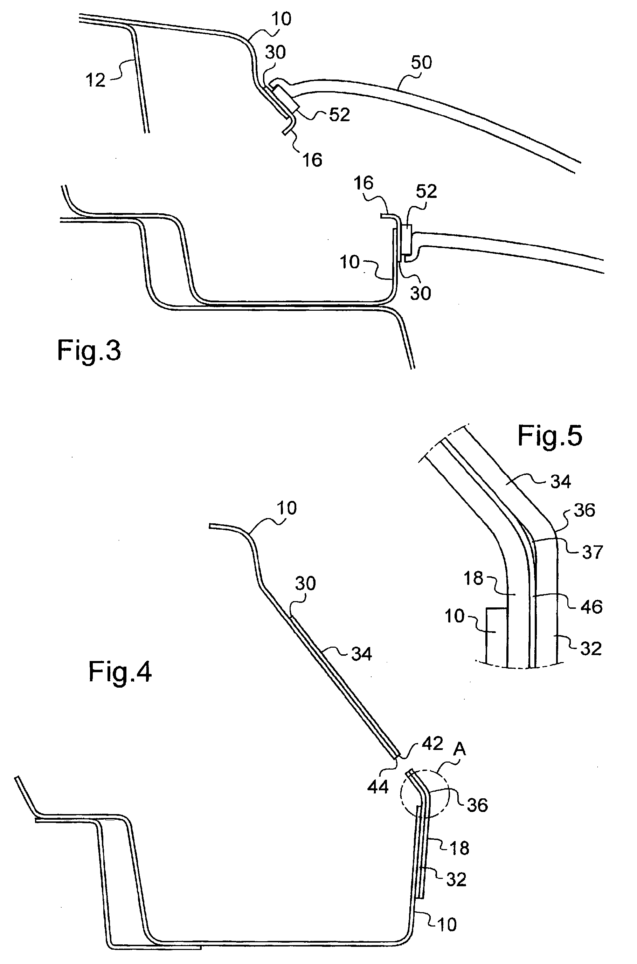

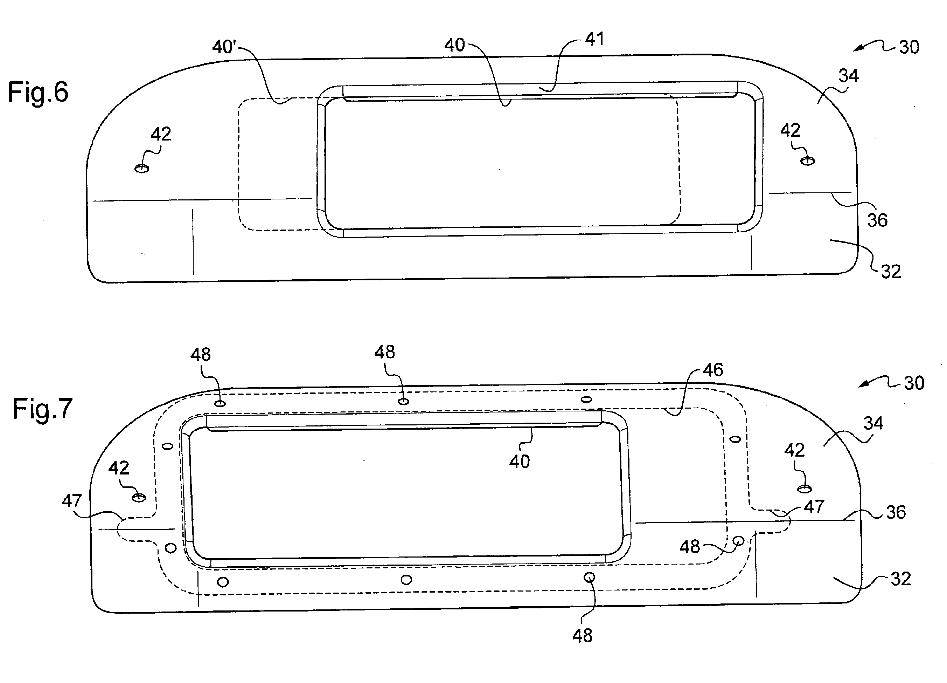

On a représenté sur la figure 6 en ligne de points 40' une position alternative de la fenêtre 40 pour un cadre 30 prévu pour une conduite à droite. Par ailleurs, on a représenté en 41, autour de la fenêtre 40, la piste d'étanchéité continue destinée au joint d'étanchéité 52 du conduit d'air 50 qui sera appliqué contre le cadre 30 (cf. figure 3), du côté habitacle.

Le cadre 30 comprend dans sa partie 34 deux trous 42, de préférence oblongs, destinés au passage de rivets de fixation provisoire du cadre 30 sur la tôle 10, et coopérant avec des trous 44, qui peuvent également être oblongs, prévus dans la tôle 10 au-dessus des pattes 18.

Sur la figure 7 qui montre la face interne du cadre 30 on a représenté en tirets la position du joint d'étanchéité 46 qui entoure de manière continue la fenêtre 40 et l'ouverture formée par les échancrures 16 et au travers duquel sont localisés les points de soudure 48, répartis au long du joint 46, destinés à la fixation définitive du cadre 30 sur les tôles 10 et 12. Ce joint 46, est disposé selon une ligne sensiblement rectangulaire et se prolonge éventuellement sur ses petits côtés par des langues 47 au niveau du coude 36 du cadre 30.

Le joint ou mastic de tôlerie 46 est réalisé dans une matière étanche thermoexpansible, par exemple l'une de celles connues par le document WO 2008/065049. Cette matière et l'épaisseur du joint déposé 46 sont de nature à autoriser le soudage ultérieur au niveau des points de soudures 48.

En se reportant à nouveau à la figure 2, on voit qu'il existe par construction, entre la feuillure 22 et la patte 18, un trou de matière 23 de petite dimension, appelé trou de fin de feuillure. Selon un aspect avantageux de l'invention, ce trou peut être bouché automatiquement lors du gonflement du joint d'étanchéité 46 au moment du bain de cataphorèse, même s'il est aussi envisageable de boucher ce trou par une étape supplémentaire de masticage. Lors du gonflement du joint 46, le mastic qui se trouve au niveau des langues 47 (figure 7) va fluer dans le creux intérieur du coude 36, au niveau de l'espace 37 (figure 5) et de là se propager jusqu'au trou de fin de feuillure 23 qu'il viendra boucher. Cet espace inter-tôle 37 forme un passage longitudinal qui facilite le fluage du mastic des langues 47 en direction du trou 23 ; cet espace 37 peut être formé en prévoyant au niveau du coude de raccordement entre la patte 18 de la TIB et la tôle 10 un rayon de courbure relativement grand tandis qu'on prévoit à l'intérieur du coude 36 du cadre 30 un rayon de courbure relativement petit.

## Revendications

1. Dispositif d'étanchéité à cheval sur deux surfaces (10, 20) de carrosserie automobile formant un angle, les deux surfaces formant deux échancrures définissant une ouverture à cheval sur les deux surfaces et qui est constitué d'un cadre métallique rigide (30) à fenêtre (40), anglé de manière à s'appliquer aux deux surfaces (10, 20) autour de l'ouverture, et d'un joint (46) d'étanchéité thermoexpansible entourant ladite fenêtre (40) et l'ouverture et disposé sur la surface interne du cadre rigide (30) tournée vers les surfaces (10, 20) de carrosserie, ce cadre (30) étant adapté pour être rendu solidaire des deux surfaces (10, 20) par des moyens de solidarisation (48).

2. Dispositif selon la revendication 1, **caractérisé en ce que** les moyens de solidarisation (48) comportent des points de soudure répartis autour de l'ouverture.

3. Dispositif selon la revendication 1 ou 2, **caractérisé en ce qu'**il est prévu des moyens (42, 44) de présolidarisation partielle du cadre (30) à l'une au moins des surfaces (10, 20).

4. Dispositif selon l'une des revendications 1 à 3, **caractérisé en ce que** la fenêtre (40) du cadre (30) est plus petite que l'ouverture des surfaces et latéralisée par rapport à celle-ci.

5. Dispositif selon l'une des revendications 1 à 4, **caractérisé en ce que** la cadre (30) est adapté à recevoir un conduit d'air (50) entourant la fenêtre (40).

6. Dispositif selon l'une des revendications 1 à 5, pour une surface (10) de traverse de baie et une surface (20) de cloison de chauffage réunies horizontalement par une feuillure (22) et où l'ouverture à cheval est entourée de part et d'autre par une patte coudée (18) tombant de la surface (10) de traverse de baie et disposé à l'extrémité de la feuillure (22) en laissant un trou (23) de fin de feuillure, **caractérisé en ce que** le cadre (30) est fixé sur ses côtés sur les deux pattes (18).

7. Dispositif selon la revendication 6, **caractérisé en ce qu'**il est prévu entre le coude des pattes (18) et le coude (36) du cadre (30) qui les surmonte un passage horizontal (37) destiné à faciliter le fluage du joint d'étanchéité (46) en direction du trou (23) de fin de feuillure.

8. Procédé de réalisation d'un dispositif d'étanchéité à cheval sur deux surfaces (10, 20) de carrosserie automobile formant un angle, les deux surfaces formant deux échancrures définissant une ouverture à cheval sur les deux surfaces, **caractérisé en ce qu'**on vient appliquer un cadre métallique rigide (30) à fenêtre (40), anglé, sur les deux surfaces (10, 20) autour de l'ouverture, en ayant prévu un joint (46) d'étanchéité thermoexpansible entourant ladite fenêtre (40) et l'ouverture et disposé sur la surface interne du cadre rigide (30) tournée vers les surfaces (10, 20) de carrosserie, **en ce qu'**on solidarise ce cadre (30) avec les deux surfaces (10, 20) par des moyens de solidarisation (48) **et en ce qu'**on chauffe l'ensemble de manière que le joint d'étanchéité (46) gonfle, ce qui permet de réaliser une étanchéité efficace.

9. Procédé selon la revendication 8, **caractérisé en ce qu'**on chauffe l'ensemble par le passage en bain chaud de cataphorèse.

## Patentansprüche

1. Dichtungsvorrichtung über zwei angewinkelten Oberflächen (10, 20) einer automobilen Karosserie, wobei die zwei Oberflächen zwei Aussparungen bilden, die eine Öffnung überlappend den zwei Oberflächen definieren, und die aus einem starren Metallrahmen (30) mit Fenster (40), der angewinkelt ist, um an den zwei Oberflächen (10, 20) um die Öffnung herum angebracht zu sein, und aus einer thermisch expandierenden Abdichtungsdichtung (46) gebildet ist, die das Fenster (40) und die Öffnung umgibt und auf der inneren Oberfläche des starren Rahmens (30) angeordnet ist, die den Oberflächen (10, 20) der Karosserie zugewandt ist, wobei dieser Rahmen (30) geeignet ist, mit den zwei Oberflächen (10, 20) durch Verbindungsmittel (48) verbunden zu sein.

2. Vorrichtung nach Anspruch 1, **dadurch gekennzeichnet, dass** die Verbindungsmittel (48) Schweißpunkte aufweisen, die um die Öffnung herum verteilt sind.

3. Vorrichtung nach Anspruch 1 oder 2, **dadurch gekennzeichnet, dass** Mittel (42, 44) zur teilweisen Vorverbindung des Rahmens (30) an mindestens einer der Oberflächen (10, 20) vorgesehen sind.

4. Vorrichtung nach einem der Ansprüche 1 bis 3, **dadurch gekennzeichnet, dass** das Fenster (40) des Rahmens (30) kleiner ist als die Öffnung der Oberflächen und dieser gegenüber zur Seite verlagert ist.

5. Vorrichtung nach einem der Ansprüche 1 bis 4, **dadurch gekennzeichnet, dass** der Rahmen (30) geeignet ist, einen Luftkanal (50) aufzunehmen, der das Fenster (40) umgibt.

6. Vorrichtung nach einem der Ansprüche 1 bis 5 für eine Oberfläche (10) eines Querstücks der Fensteröffnung und eine Oberfläche (20) der Heizungstrennwand, die horizontal durch einen Falz (22) verbunden sind, und wobei die überlappende Öffnung auf der einen und auf der anderen Seite von einer gebogenen Lasche (18) umgeben ist, die von der Oberfläche (10) des Querstücks der Fensteröffnung herunterfällt und am Ende des Falzes (22) so angeordnet ist, dass sie am Ende des Falzes ein Loch (23) lässt, **dadurch gekennzeichnet, dass** der Rahmen (30) an seinen Seiten auf den zwei Laschen (18) befestigt ist.

7. Vorrichtung nach Anspruch 6, **dadurch gekennzeichnet, dass** zwischen der Biegung der Laschen (18) und der Biegung (36) des Rahmens (30), der sie übersteht, ein horizontaler Durchgang (37) vorgesehen ist, der dazu bestimmt ist, das Weiterverformen der Abdichtungsdichtung (46) in Richtung des Loches (23) am Ende des Falzes zu erleichtern.

8. Verfahren zum Herstellen einer Dichtungsvorrichtung über zwei angewinkelten Oberflächen (10, 20) einer automobilen Karosserie, wobei die zwei Oberflächen zwei Aussparungen bilden, die eine Öffnung überlappend den zwei Oberflächen definieren, **dadurch gekennzeichnet, dass** ein starrer Metallrahmen (30) mit Fenster (40), der angewinkelt ist, an den zwei Oberflächen (10, 20) um die Öffnung herum angebracht wird, wobei eine thermisch expandierende Abdichtungsdichtung (46) vorgesehenen ist, die das Fenster (40) und die Öffnung umgibt und auf der inneren Oberfläche des starren Rahmens (30) angeordnet ist, die den Oberflächen (10, 20) der Karosserie zugewandt ist, und dadurch, dass dieser Rahmen (30) mit den zwei Oberflächen (10, 20) durch Verbindungsmittel (48) verbunden wird, und dadurch, dass die Anordnung derart erhitzt wird, dass die Abdichtungsdichtung (46) expandiert, wodurch ein wirksames Abdichten erreicht wird.

9. Verfahren nach Anspruch 8, **dadurch gekennzeichnet, dass** die Anordnung durch das Durchlaufen eines heißen Kataphoresebads erhitzt wird.

## Claims

1. Sealing device spanning two surfaces (10, 20) of a motor-vehicle body forming an angle, the two surfaces forming two notches defining an opening spanning the two surfaces, which device consists of a rigid metal frame (30) with a window (40), angled so as to be applied to the two surfaces (10, 20) around the opening, and of a thermally expandable seal (46) surrounding said window (40) and the opening and placed on the inner surface of the rigid frame (30) turned toward the body surfaces (10, 20), this frame (30) being adapted to be secured to the two surfaces (10, 20) by securing means (48).

2. Device according to Claim 1, **characterized in that** the securing means (48) comprise spot welds distributed around the opening.

3. Device according to Claim 1 or 2, **characterized in that** means (42, 44) are provided for partially securing the frame (30) in advance to at least one of the surfaces (10, 20).

4. Device according to one of Claims 1 to 3, **characterized in that** the window (40) of the frame (30) is smaller than the opening of the surfaces and is lateralized relative to the latter.

5. Device according to one of Claims 1 to 4, **characterized in that** the frame (30) is adapted to receive an air duct (50) surrounding the window (40).

6. Device according to one of Claims 1 to 5, for an aperture cross-member surface (10) and a heating-partition surface (20) joined horizontally by a rebate (20) and where the spanning opening is surrounded on either side by a bent gusset plate (18) falling from the aperture cross-member surface (10) and placed at the end of the rebate (22) while leaving a hole (23) at the end of the rebate, **characterized in that** the frame (30) is fastened on its sides to the two gusset plates (18).

7. Device according to Claim 6, **characterized in that** provided between the bend of the gusset plates (18) and the bend (36) of the frame (30) that surmounts them is a horizontal passageway (37) designed to make it easier for the seal (46) to creep in the direction of the hole (23) at the end of the rebate.

8. Method for producing a sealing device spanning two surfaces (10, 20) of motor-vehicle body forming an angle, the two surfaces forming two notches defining an opening spanning the two surfaces, **characterized in that** an angled, rigid metal frame (30) with a window (40) is applied to the two surfaces (10, 20) around the opening, with a thermally expandable seal (46) having been provided surrounding said window (40) and the opening and placed on the inner surface of the rigid frame (30) turned toward the body surfaces (10, 20), and **in that** this frame (30) is secured to the two surfaces (10, 20) by securing means (48) **and in that** the assembly is heated so that the seal (46) swells which produces an effective seal.

9. Method according to Claim 8, **characterized in that** the assembly is heated by being passed through a hot cataphoresis bath.
